# EUROPÄISCHE PATENTANMELDUNG

(11) **EP 1 715 294 A1**
(43) Veröffentlichungstag der Anmeldung: **25.10.2006**
(21) Anmeldenummer: 06112065.5
(22) Anmeldetag: 31.03.2006
(51) Int. Cl.: G01C 21/26, G06T 15/00

(54) **Verfahren zur dreidimensionalen Darstellung einer digitalen Straßenkarte**

(30) Priorität: 19.04.2005 DE 200520018081
(71) Anmelder: ROBERT BOSCH GMBH, 70442 Stuttgart (DE)
(72) Erfinder: Jung, Thomas, 33613, Bielefeld (DE)

(57) **Zusammenfassung**

Um ein Verfahren anzugeben, welches Bereiche einer visuellen Darstellung einer digitalen Straßenkarte, welche einer großen Entfernung von der aktuellen Fahrzeugposition entsprechen und in denen die Bildelemente aufgrund der Perspektive sehr dicht erscheinen, zur Vermittlung eines erhöhten Tiefeneindrucks nutzt, ist vorgesehen, dass die Farbgebung von in der visuellen Darstellung der digitalen Straßenkarte (16) gezeichneten Bildelementen von der Entfernung zwischen ihrer Position und der des Fahrzeugs in der digitalen Straßenkarte abhängen.

## Beschreibung

### Technisches Gebiet

Die Erfmdung betrifft ein Verfahren zur dreidimensionalen Darstellung einer digitalen Straßenkarte gemäß dem Oberbegriff des Anspruchs 1 sowie eine Navigationseinrichtung gemäß dem Oberbegriff des Anspruchs 6.

### Stand der Technik

Aus dem Stand der Technik sind Navigationseinrichtungen bekannt, bei welchen ein Teil einer Straßenkarte abhängig von der Position eines Fahrzeugs und dessen Bewegungsrichtung auf einem Bildschirm wiedergegeben wird. Dabei sind verschiedene Darstellungsarten üblich, welche bezüglich der ihnen zugrundeliegenden Datenstrukturen und der vom System ausgeführten Rechenoperationen in verschiedene Kategorien eingeteilt werden. Das einfachste Modell ist eine zweidimensionale Darstellung einer die Navigationsdaten (Flächen, Linien, Punkte, Beschriftungen) enthaltenden Vektorkarte. Um den Fahrzeugführenden möglichst leicht zu interpretierende, visuelle Informationen über ihre Umgebung zur Verfügung zu stellen, wird dagegen oft eine perspektivische Darstellung der Kartendaten bevorzugt. Wahlweise kann die Darstellung dabei Höheninformationen des nicht notwendigerweise ebenen Geländes enthalten oder lediglich eine dreidimensionale Darstellung einer "flachen" Karte sein. Letzteres Modell wird als pseudo-3D Darstellung bezeichnet. In beiden Fällen müssen die der Karte zugrundeliegenden Daten einer Vektorkarte unter dem Einfluss einer Koordinatentransformation in die eine perspektivische Repräsentation enthaltenden Bilddaten umgerechnet werden. Üblicherweise wird eine lineare Abbildungsvorschrift eingesetzt, bei welcher für in der Karte vorhandene Linien einfach deren Endpunkte projiziert und wieder mit einer Linie verbunden werden. Aus diesen Linien setzen sich dann zu füllende Polygone zusammen. Ein CPU-Standard (Central Processing Unit) oder eine GPU (Graphical Processing Unit) führt die notwendigen 3D-Vektoroperationen und Polygon-Schattierungen in Hardware aus.

Der perspektivische Eindruck wird dadurch erreicht, dass eine virtuelle Betrachtungsposition oberhalb der tatsächlichen Fahrzeugposition gewählt wird. Je höher die Betrachtungsposition ist, desto mehr Informationen werden dem Benutzer zur Verfügung gestellt, welche er von seiner Position in seinem Fahrzeug gegebenenfalls nicht erhalten würde. Oftmals wird zur besseren Orientierung auch die Position des Fahrzeugs auf der Karte wiedergegeben.

Zur Berechnung der Bilddaten kann im Prinzip jedes Projektionsverfahren verwendet werden, welches eine räumliche Wirkung erzeugt. Besonders bekannt ist dabei die Zentralprojektion, bei welcher alle in der Karte abzubildenden Punkte über Verbindungslinien mit dem Projektionszentrum, welches mit der Betrachtungsposition zusammenfällt, über Verbindungslinien verbunden sind, deren Schnittpunkte mit einer Projektionsebene das projizierte Bild ergibt. Aufgrund der Geometrie einer solchen oder ähnlichen Projektion erscheint in der visuellen Darstellung ein Horizont, in dessen Nähe die Straßen, Füllflächen etc. dicht gedrängt erscheinen. Für den Benutzer der Navigationseinrichtung enthält die visuelle Darstellung in diesem Bereich nur wenige ihm nützliche Informationen. Gleichzeitig erscheint die digitale Straßenkarte unterhalb des Horizontes unrealistisch, da ein Betrachter unter Normalbedingungen kein Element am Horizont mit beliebiger Auflösung beobachten kann.

### Darstellung der Erfindung, Aufgabe, Lösung, Vorteile

Aufgabe der Erfindung ist es, Bereiche der visuellen Darstellung, welche einer großen Entfernung von der aktuellen Fahrzeugposition entsprechen und in denen die Bildelemente aufgrund der Perspektive sehr dicht erscheinen, zu nutzen, um dem Benutzer einen erhöhten Tiefeneindruck zu vermitteln.

Erfindungsgemäß wird diese Aufgabe mittels eines Verfahrens mit den im Anspruch 1 genannten Merkmalen oder mittels einer Navigationseinrichtung mit den im Anspruch 6 genannten Merkmalen gelöst.

Dadurch, dass die Farbgebung von in der visuellen Darstellung der digitalen Straßenkarte gezeichneten Bildelementen von der Entfernung zwischen ihrer Position und der des Fahrzeugs in der digitalen Straßenkarte abhängen, kann ein realistischer Tiefeneindruck erzeugt werden. Durch die Luftfeuchtigkeit in der Erdatmosphäre werden die Rotanteile des Lichtspektrums herausgefiltert, wodurch weiter entfernte Objekte einen höheren Blauanteil besitzen. Gleichzeitig geht mit der Verblauung die Reflexion von Streulicht einher, wodurch die weiter entfernten Luftschichten außerdem heller erscheinen. Insgesamt ist somit mit wachsender Entfernung ein Übergang der Objektfarben zu einem hellen Blau am Horizont zu beobachten. Dieser Übergang wird durch das erfindungsgemäße Verfahren in der visuellen Darstellung der Straßenkarte nachgeahmt.

In bevorzugter Ausgestaltung der Erfindung ist vorgesehen, dass die variierende Farbgebung durch Anwendung von Compositing erfolgt, wobei verschiedene Transparenzstufen für unterschiedliche Entfernungen vorgesehen sind. Hierdurch kann das erfindungsgemäße Verfahren durch die Benutzung einer wohlbekannten Technik leicht umgesetzt werden. Bei der üblichsten Version des Compositing, dem alpha-Compositing, ist jedem Pixel außer den RGB-Daten ein Alpha-Wert A, seine sogenannte Opacity, zugeordnet. Bei einer 8-Bit-Darstellung beträgt dieser 255 für völlig opak und 0 für völlig transparent. Die zu zeichnenden Layer der visuellen Darstellung der digitalen Straßenkarte werden einer nach dem anderen gezeichnet, wobei es in jedem Schritt einen Vordergrund und Hintergrund gibt. Dabei ist als Hintergrund der Layer anzusehen, welcher in einem vorangehenden Schritt fertiggestellt worden ist. Das Ergebnis des Compositing bildet dann in einem nächsten Schritt den Hintergrund, bis als Ergebnis des letzten Compositing-Schritts das fertige Bild vorliegt. Ist der Hintergrund völlig transparent, so resultiert als Ergebnis des Compositing der Vordergrund und umgekehrt. Ist der Vordergrund opak, wird der Hintergrund überschrieben. Im erfindungsgemäßen Verfahren ist der Hintergrund der Layer, welcher die topographischen Informationen enthält, und der Vordergrund ein Layer, welcher eine oder mehrere Farben aufweist, die sich zur Darstellung eines durch die entfernungsabhängige Streuung des Lichtes hervorgerufenen Farbschleiers eignen. In Abhängigkeit der berechneten darzustellenden Entfernung wird die Transparenz dieses Layers variiert.

In bevorzugter Ausführungsform der Erfindung ist vorgesehen, dass der Blauanteil der Bildelemente mit zunehmender Entfernung zwischen ihrer Position und der des Fahrzeugs in der digitalen Straßenkarte wächst. Dies kann bei Anwendung von alpha-Compositing zur Herstellung des gewünschten Effektes dadurch erreicht werden, dass der Vordergrund einen in jedem Pixel gleichen (hellen) Blauton, sowie eine variable Transparenz aufweist, welche von völlig transparent bei niedrigen Entfernungen von der Fahrzeugposition bis zu völlig opak am Horizont reicht. Eine Fortsetzung des dadurch gewonnenen Farbverlaufes im Luftraum oberhalb des Horizontes kann dadurch erreicht werden, dass auch hier der Vordergrund opak ist. Alternativ können hier im den Vordergrund oder den Hintergrund repräsentierenden Layer Wolkenkulissen gezeichnet sein.

Weiterhin ist bevorzugt, dass die Farbgebung von orientierungs- und routenrelevanten Elementen entfernungsunabhängig ist. Es können somit wichtige Verkehrsstrecken oder andere Elemente selbst dann wiedergegeben werden, wenn sie sich in einem sehr hohen geographischen Abstand von der aktuellen Position des Fahrzeugs befinden. Die Verkehrsbedeutung der entfernungsunabhängig angezeigten Elemente wird entweder als Eigenschaft in der Straßenkarte vermerkt oder in Abhängigkeit von der Fahrereingabe bestimmt. Sie werden beim Aufbau der visuellen Darstellung durch alpha-Compositing entweder maskiert oder durch spätere Überlagerung in einem weiteren Compositing-Schritt hervorgehoben.

Des Weiteren wird die Aufgabe der Erfindung durch die erfindungsgemäße Navigationseinrichtung gelöst, welche sich dadurch auszeichnet, dass die Umwandlungseinheit Mittel zum Zeichnen von Bildelementen mit einer Farbgebung, welche von der Entfernung zwischen der Position der Bildelemente und der des Fahrzeugs in der digitalen Straßenkarte abhängt, umfasst.

Weitere bevorzugte Ausgestaltungen der Erfindung ergeben sich aus den in den Unteransprüchen genannten Merkmalen.

### Kurze Beschreibung der Zeichnungen

Nachstehend wird die Erfindung in einem Ausführungsbeispiel anhand der beigefügten Zeichnungen näher erläutert. Es zeigen:
Figur 1 eine erFmdungsgemäße Navigationseinrichtung;
Figur 2 eine visuelle Darstellung einer Straßenkarte mit Tiefenwirkung und
Figur 3 eine visuelle Darstellung einer Straßenkarte mit Tiefenwirkung und zusätzlichen orientierungs- und routenrelevanten Hervorhebungen.

### Bester Weg zur Ausführung der Erfindung

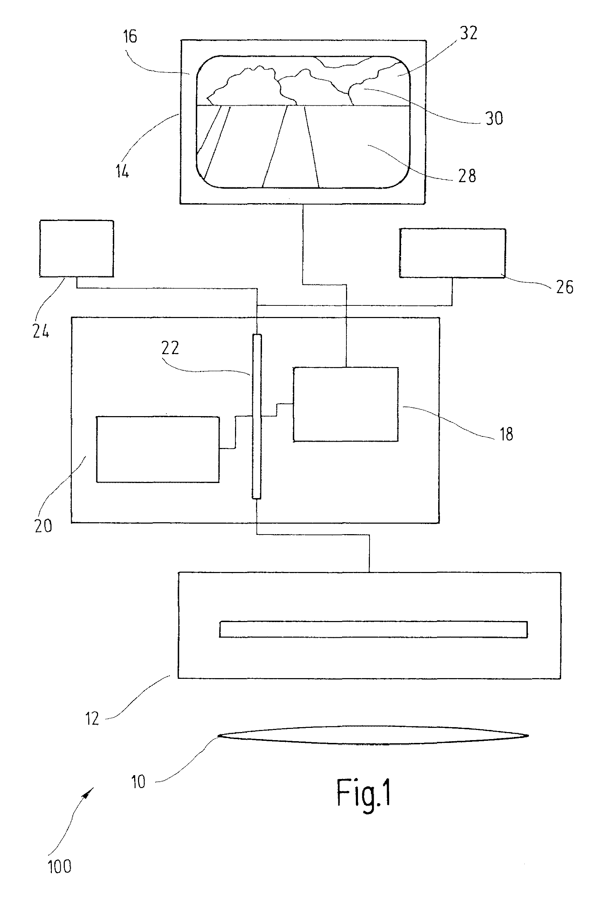

Figur 1 zeigt eine insgesamt mit 100 bezeichnete Navigationseinrichtung. Die Daten einer digitalen Straßenkarte sind auf einem Speichermedium 10 gespeichert, beispielsweise auf einer CD-ROM oder einer DVD, welches sich in einem Laufwerk 12 befindet. Auf einer Anzeigeeinrichtung 14 wird eine visuelle Darstellung der digitalen Straßenkarte 16 angezeigt, welche von einem Mikroprozessor 18 erzeugt wird, welcher die aktuelle Position des Fahrzeugs auf der Grundlage von Messdaten, welche von einem Positionssensor 24 wie z.B. einen GPS-Sensor und einem Richtungsmesser 26 ermittelt werden, berechnet und einen Teil der Straßenkarte aus dem Speichermedium 10 liest, welcher die aktuelle Position des Fahrzeugs einschließt. Der Mikroprozessor 18, welcher über einen Systembus 22 mit einem Arbeitsspeicher 20 verbunden ist, berechnet in regelmäßigen Zeitabständen perspektivische Bilder, welche an die aktuelle Position und Orientierung des Fahrzeugs angepasst sind und den Fahrzeugführenden mit Informationen über seine unmittelbare Umgebung und den angestrebten Zielort versorgt. Die auf der Anzeigeinrichtung 14 wiedergegebene visuelle Darstellung der digitalen Straßenkarte 16 weist einen die topographischen Informationen enthaltenen ersten Bereich 28 und einen von dem ersten Bereich durch einen Horizont 30 getrennten zweiten Bereich 32 auf, welcher dem Luftraum entspricht. Die durch den Mikroprozessor 18 und den Arbeitsspeicher 20 gebildete Bildumwandlungseinheit umfasst Mittel zum Zeichnen von Bildelementen mit einer Farbgebung, welche von der Entfernung zwischen der Position der Bildelemente und der des Fahrzeugs in der digitalen Straßenkarte abhängt.

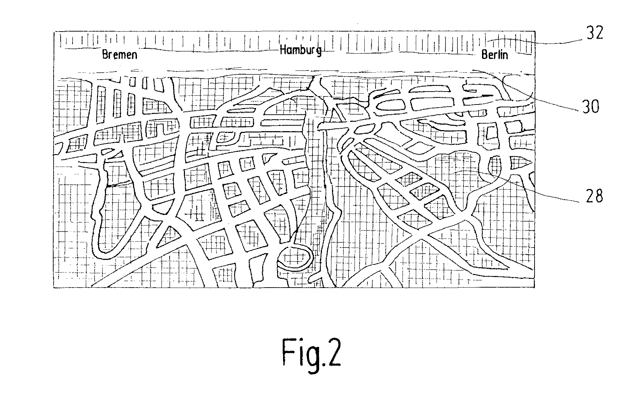

Figur 2 zeigt im genaueren Detail die visuelle Darstellung einer Straßenkarte 16.

Die visuelle Darstellung 16 beschränkt sich auf ein in Fahrtrichtung liegendes Blickfeld auf der Grundlage eines erhöhten, virtuellen Standpunktes, seitlich begrenzt durch einen gegebenen Öffnungswinkel der Darstellung. Die Darstellung ist nicht unbedingt an die Blickrichtung oder Fahrtrichtung gekoppelt. Eine manuelle freie Drehung um die aktuelle Position ist ebenso denkbar. Der die topographischen Informationen enthaltene erste Bereich 28 stellt unter Verwendung einer Koordinatentransformation aus den auf dem Speichermedium abgespeicherten Daten einer digitalen Straßenkarte ausgerechnete Straßensegmente und an sie grenzende Füllflächen farblich dar. Die in der Anzeigeeinrichtung 14 angezeigten Bilder werden periodisch neu berechnet und dargestellt. Das erfindungsgemäße Verfahren bezieht sich auf jedes einzelne solcher Bilder. Mit zunehmender Entfernung von der Fahrzeugposition, d.h. bei Annäherung an den Horizont 30, werden die Straßensegmente mit einem zunehmenden Blauanteil dargestellt. Am Horizont 30 werden sie vollständig durch den entstehenden Blauschleier überdeckt. Dies hat zur Folge, dass am Horizont 30 keine die Straßenkarte betreffenden Informationen vom Benutzer identifizierbar sind. Somit kann auf eine Ausführung der Koordinatentransformation für Bereiche in der unmittelbaren Nähe des Horizontes verzichtet werden. Durch die Eliminierung dieser Daten wird ein Bild erhalten, welches im Wesentlichen die gleiche Menge relevanter Informationen für den Benutzer enthält, aber schneller interpretiert werden kann. Außerdem führt dies zu einer Erhöhung der Rechengeschwindigkeit bei Beibehaltung einer übersichtlichen Darstellung der Karte.

Licht von einem entfernten Objekt weist eine konstante Streuwahrscheinlichkeit pro Längeneinheit auf. Somit ist es ein realistisches Modell, bei Verwendung von alpha-Compositing zur Darstellung eines entfernungsabhängigen Farbverlaufes einen exponentiell mit der Entfernung variierenden Alphawert zu verwenden, welcher den über der Straßenkartendarstellung liegenden Blauschleier bestimmt.

Im Bereich 32, welcher dem Luftraum entspricht, ist kein Blauschleier erforderlich, da hier Wolkenkulissen berechnet und als fertige Bilder gezeichnet werden können. Der für die Darstellung der wolkenfreien Bereiche des Luftraums 32 benutzte Blauton ist typischerweise identisch mit demjenigen, der als Grundlage für die beschriebenen Blauschleier benutzt wird.

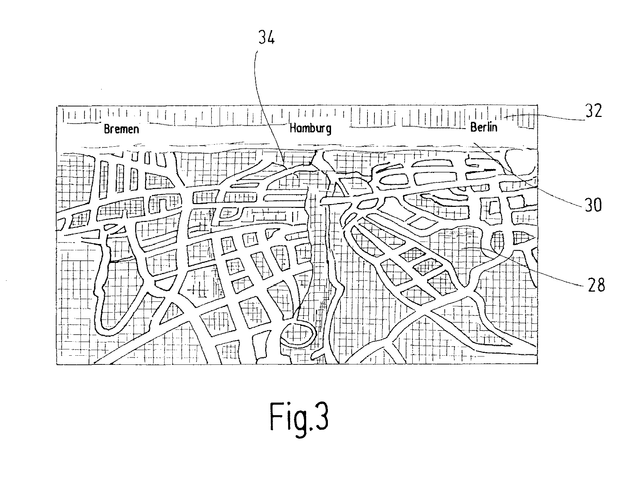

Figur 3 weist zusätzlich orientierungs- und routenrelevante Hervorhebungen 34 in der Nähe des Horizontes 30 auf. Beispielsweise bestimmt der Benutzer durch Eingabe in die Navigationseinrichtung, welches sein Reiseziel ist, und welche Strecke er benutzen möchte, um sein Reiseziel zu erreichen. Diese individuellen Informationen werden auch im Bereich in der Nähe des Horizonts 30, welcher einen opaken oder nahezu opaken Blauschleier aufweist, dargestellt.

## Patentansprüche

1. Verfahren zur dreidimensionalen Darstellung wenigstens eines Teils einer digitalen Straßenkarte in einem Navigationssystem (100), wobei topographische Informationen aus auf einem Speichermedium (10) abgespeicherten Daten in Abhängigkeit von einer Position und einer Fahrtrichtung eines Kraftfahrzeugs selektiert und unter Verwendung einer Koordinatentransformation in eine visuelle Darstellung der digitalen Straßenkarte (16) entsprechend eines virtuellen, erhöhten Blickpunktes überführt werden,
**dadurch gekennzeichnet, dass**
die Farbgebung von in der visuellen Darstellung der digitalen Straßenkarte (16) gezeichneten Bildelementen von der Entfernung zwischen ihrer Position und der des Fahrzeugs in der digitalen Straßenkarte abhängen.

2. Verfahren nach Anspruch 1,
**dadurch gekennzeichnet, dass**
die visuelle Darstellung der digitalen Straßenkarte (16) einen die topographischen Informationen enthaltenen ersten Bereich (28) und einen von dem ersten Bereich (28) durch einen Horizont (30) getrennten zweiten Bereich (32) aufweist.

3. Verfahren nach einem der vorangehenden Ansprüche ,
**dadurch gekennzeichnet, dass**
der Blauanteil der Bildelemente mit zunehmender Entfernung zwischen ihrer Position und der des Fahrzeugs in der digitalen Straßenkarte wächst.

4. Verfahren nach einem der vorangehenden Ansprüche,
**dadurch gekennzeichnet, dass**
die variierende Farbgebung durch Anwendung von Compositing, insbesondere alpha-Compositing, erfolgt, wobei verschiedene Transparenzstufen für unterschiedliche Entfernungen vorgesehen sind.

5. Verfahren nach einem der vorangehenden Ansprüche,
**dadurch gekennzeichnet, dass**
die Farbgebung von orientierungs- und routenrelevanten Elementen (34) entfernungsunabhängig ist.

6. Navigationseinrichtung (100) mit einer Anzeigeeinrichtung (14), einer Positionsbestimmungseinheit (24), einem Speichermedium (10), auf welchem zweidimensionale topographische Informationen mit einem Netzwerk von Straßensegmenten gespeichert sind oder speicherbar sind, und einer Umwandlungseinheit (18, 20) zur Umwandlung der topographischen Informationen in eine visuelle Darstellung einer digitalen Straßenkarte (16) entsprechend eines virtuellen, erhöhten Blickpunktes,
**dadurch gekennzeichnet, dass**
die Umwandlungseinheit (18, 20) Mittel zum Zeichnen von Bildelementen mit einer Farbgebung, welche von der Entfernung zwischen der Position der Bildelemente und der des Fahrzeugs in der digitalen Straßenkarte abhängt, umfasst.
